# EUROPEAN PATENT APPLICATION

(11) **EP 3 838 587 A1**
(43) Date of publication of application: **23.06.2021**
(21) Application number: 19218425.7
(22) Date of filing: 20.12.2019
(51) Int. Cl.: B32B 27/18, B32B 27/32, C08J 5/18, B32B 3/26, B32B 3/02

(54) **MULTILAYER STRETCH FILM COMPRISING PCR PLASTIC WASTE MATERIAL**

(71) Applicant: Duo Plast AG, 36341 Lauterbach (DE)
(72) Inventor: STEINER, Erich, 6406 Greppen (CH); KAASE, Detlef, 36041 Fulda (DE)
(74) Representative: f & e patent

(57) **Abstract**

The present invention pertains to a multilayer stretch wrap film, particularly a polyolefin stretch film comprising at least 20 wt.% of PCR plastic waste material, a method of preparation thereof and the use of the multilayer stretch film according to the invention for stretch wrapping operations of goods.

## Description

The present invention pertains to a multilayer stretch wrap film, particularly a polyolefin stretch film comprising at least 20 wt.% of PCR plastic waste material, a method of preparation thereof and the use of the multilayer stretch film according to the invention for stretch wrapping operations of goods.

Stretch films that self-seal when portions are overlapped are known as "cling" films. These films are most often multilayer films and are e.g. used in applications where it is desirable to securely hold and/or wrap an article or group of articles, such as load palletization but also to provide an oxygen barrier to goods, like in agriculture in preparing silage for animals. For packaging operations, the film is stretched tightly around the good or plurality of goods to be packaged, and self-sealed while the film is still in the stretched condition to create a secure, unitised package. Both unstretched or pre-stretched films are used for packaging and retention of substantial cling properties and good tear properties while the film is stretch-wrapped is required to maintain the integrity of the unitised load.

During the last years it became more and more evident that the production of plastic articles, like e.g. high-quality film products as considered here, indeed not only is using a high amount of natural resources (e.g. mineral oil), but also results in a huge amount of plastic waste, which has to be handled suitably to not pollute the environment unnecessarily. Thus, for several years it is focussed to recycle plastic waste.

Stretchable films, however, have to fulfil particular properties: they have to be elastic, but strong enough not to tear or break during usage, they have to be thin enough not to provide too much weight to the wrapped product, but thick enough to safe the wrapped product and to provide an oxygen barrier, if desired. The usage of recycled plastic material, however, affects noticeably the properties of the stretch films, due to contamination and "further use" of the plastic material.

It has been the object of the present invention to provide a multilayer thermoplastic stretch film useful for wrapping goods, saving environmental resources and lowering the CO₂ footprint by including a noticeable amount of post-consumer recycled (PCR), but providing similar good application characteristics as commonly known stretch films made from non-waste polymers.

This object is met by a multilayer stretch film having at least a first layer (i) with "cling" properties comprising an olefin (co)polymer composition and at least one slip agent, a second layer (ii) with "non-cling" / "slip" properties comprising another olefin (co)polymer composition and optionally also at least one slip agent, and a third layer (iii), represented by at least one "core" layer comprising at least 20 wt.% of (co)polymers of post-consumer recycled (PCR) plastic waste material, wherein at least the first layer (i) comprises at least one slip agent(s) providing the surface with a thin layer of said slip agent(s) covering at least 50 % up to 100 % of the outer surface of the first layer (i), wherein said slip agent(s) are selected from C₁₈-to C₂₆-fatty acid amides having at least one cis unsaturation.

According to one embodiment the thin layer of slip agent(s) on the surface of at least the first layer (i) is provided by migration of the one or more slip agent(s) to the outer surface of the first layer (i). The migration of said slip agent(s) to the surface occurs due to the limited compatibility of the slip agent(s) with the (co)polymer composition of the first layer (i).

The first layer (i) or cling layer of the stretch film comprises at least one slip agent selected from C₁₈-to C₂₆-fatty acid amides having at least one cis unsaturation, and optionally one or more further (different) slip agent(s) which preferably are selected from stearic acid, 12-hydroxystearic acid, icosanoic acid, docosanoic acid, further fatty acid amides such as stearic amide, ethylene disteaoryldiamide, polar ethylene wax, montanic acid, montanic acid ester wax, N,N'-bis-stearoyl ethylene diamine, ester of polycarboxylic acids, e.g. glycerol distearate, glycerol mono-12-hydroxystearate, glycerol tri-12-hydroxystearate, glycerol tribehenate, glycerol trimontanate, ethoxylated fatty acid amines, N,N-bis-(2-hydroxyethylene)amide of long chain fatty acids or any mixture of the mentioned.

The slip agent(s) selected from C₁₆-to C₂₄-fatty acid amides having at least one cis unsaturation can preferably be selected from C16:1, C18:1, C20:1, C22: or C24:1 fatty acid amides (wherein the definition corresponds to the usually used fatty acid definition, e.g. C22:1 means a fatty acid comprising a hydrocarbon chain comprising 22 C atoms with 1 unsaturation, e.g. erucic acid), or from C16:2, C18:2, C18:3, C20:2, C22:2 or C24:2 fatty acid amides, wherein in any case the fatty acid amide comprises at least one cis unsaturation. It is preferred that the fatty acid amide is selected from C18:1, C18:2 or C18:3, or from C20:1, C22:1 or C24:1 fatty acid amides, even more preferred the fatty acid amide is selected from C18:1 (e.g. oleic acid), C20:1 (e.g. gadoleic acid or 11-eicosenoic acid), C22:1 (e.g. erucic acid or cetoleic acid) or C24:1 (e.g. nervonic acid) fatty acid amides, e.g. , and particularly preferred at least the fatty acid amide of erucic acid (C22:1 (ω-9)) having the formula C₂₂H₄₃NO is present as a slip agent. Thus, in a preferred embodiment the first layer (i) comprises at least erucic acid as a slip agent and optionally at least one further fatty acid amide selected from the above mentioned, e.g. oleic acid amide. Further, it is preferred that the second layer (ii) also comprises at least one slip agent selected from C₁₆-to C₂₄-fatty acid amides having at least one cis unsaturation as defined above, which also preferably is erucic acid.

The slip agent or the mixture of at least two of the agents is selected so that it is of limited compatibility with the (co)polymer composition of the first layer or "cling" layer resulting in that during manufacturing of the multilayer stretch film an extremely thin film is formed at the outer surface of the first layer. This thin film has an influence to the cling properties of the unstretched or pre-stretched multilayer stretch film. Said thin film may have a thickness defined by the "thickness" of just one molecule of the slip agent adhered to the surface of the first (and/or second) layer, i.e. the slip agent molecules flatly adhered to said surface. Preferably, the thickness might be from 20 nm to 0.25 µm, like from 40 nm to 180 nm or from 50 nm to 150 nm, or even from 70 to 120 nm.

The slip agent(s) can be present in the (co)polymer composition of the first layer (i) in an amount of from 1000 to 8000 ppm, based on the total weight of the (co)polymer composition of the first layer (i), preferably from 1200 ppm to 5000 ppm, more preferred from 1500 to 4000 ppm, even more preferred from 1800 to 3000 ppm. The mentioned amounts of the slip agent(s) refer to the total amount of the added slip agents being C₁₈-to C₂₆-fatty acid amides having at least one cis unsaturation. Other slip agents can be added in addition.

In the second layer (ii) the slip agent(s) selected from C₁₈-to C₂₆-fatty acid amides having at least one cis unsaturation preferably are included in a total amount of from 0 to 1000 ppm, preferably from 200 to 900 ppm, more preferred from 400 to 800 ppm and most preferred from 500 to 700 ppm, e.g. with 600 ppm. Other slip agents can be added in addition.

The second layer (ii) has "non-cling" properties but slip properties. "Non-cling" properties here means that the amount of cling of such a layer is insufficient to obtain a good self-seal when used in stretching operations although the layer may exhibit a small amount of measurable cling. The cling may be less than 10 g/cm, preferably not more than 5 g/cm as measured according to ASTM D 4649-A3 and A1.2.3 (Test Methods For Peel Cling Of Thin Films) of an unstretched film.

Preferably the second layer (ii) includes also at least one slip agent selected from C₁₈-to C₂₆-fatty acid amides having at least one cis unsaturation as defined above, preferably erucic acid. Further, the second layer (ii) may include an anti-blocking agent selected from minerals such as for example, talc, calcined kaolin, cristobalite, natural or synthetic silica (silicone dioxide), alumina-silicate ceramic, aluminum silicate, calcium carbonates, calcium sulfate (anhydrite), magnesium carbonate, magnesium sulfate, and aluminum potassium silicate, in a total amount of from 100 to 1000 ppm, preferably from 200 to 900 ppm, more preferred from 400 to 800 ppm and most preferred from 500 to 700 ppm, e.g. with 600 ppm , wherein said blocking aged includes in particular a synthetic silica.

The cling is reported as the force in grams require to separate two strips of film. For film cling determination a 25 mm x 178 mm strip of the film to be tested either unstretched used or is stretched to 100 percent or stretched to 200 percent and attached to a 20° incline plain with the layer having "non-cling" properties facing upwards. A second, 25 mm to 178 mm strip film in the similar condition (unstretched or stretched) is placed on the top of the first strip facing the "cling" layer downwards. Sufficient pressure is applied with a blush to cause the two strips to adhere together. The end of the second strip at the base of the incline plain is attached by a clip and a string to an apparatus which can exert a strain at a constant rate, such an Instron tensile tester. The two strips are separated at a cross head speed of 13 cm/minute until the attached string is parallel with the base of the inclined plain. In general, stretch cling values are lower than unstretched values.

For good self-seal of the film during stretch wrapping operation requires a cling of the first layer in the range of 30 g/cm to 180 g/cm, preferably in the range from 50 g/cm to 150 g/cm, more preferred from 50 to 80 g/cm in the 200 % stretched film. However, to keep the film during unwinding and stretching undamaged and the noise level during unwinding low, the cling of the first layer of the unstretched film should be in general as low as possible, e.g. between 10 and 20 g/cm, but suitable to achieve the desired cling in the stretched condition. This is obtained by the formation of the thin layer of the slip agent(s) or mixture of slip agents as defined above during manufacture of the multilayer stretch film, which covers at least 50% of the surface of the unstretched or pre-stretched film. The slip agent(s) is (are) selected to provide a layer at least on the surface of the first layer (i), and preferably also on the surface of the slip layer (ii), in both unstretched and pre-stretched states, as well as during stretching.

The cling of the surface of the multilayer stretch film in the unstretched or pre-stretched condition is lowered by the presence of the slip agent(s) on at least one of the surface(s) in comparison to a film including no slip agent in the cling layer. Furthermore, the presence of the slip agent(s) in the cling layer (i) and preferably also in the slip layer (ii) makes the stretch film so flexible, elastic and "non-tacky" that a noticeable amount of post-consumer recycled (PCR) plastic waste can be included into the core layer of the film without negatively affecting elasticity or stretchability without damage.

According to the invention at least one core layer (iii) is provided between the first layer (i) and the second layer (ii) comprising an olefin (co)polymer composition, which includes at least 20 wt.% by PCR plastic waste material. It is possible to arrange one or more core layers, for example two or three core layers within the composite film.

The core layer(s) can comprise at least 20 wt.% or at least 25 wt.%, even at least 27 wt.%, even more at least 28 wt.% or yet at least 30 wt.% of the weight of the core layer of (co)polymers of PCR plastic waste material, in particular PCR plastic material of already-used plastic films, preferably films of LDPE, LLDPE and optionally MLPE or ULPDE (co)polymers as described below. The core layer can comprise such PCR plastic waste material polymers in an amount of up to 60 wt.%, preferably up to 55 wt.% or up to 50 wt.%.

The PCR plastic waste material is obtained by plastic material collected by or from the consumer, preferably separated from any non-plastic material like food residues, dirt, sand, soil, etc., optionally washed or cleaned, and shredded or crushed into small particles. These particles can either be granulated or used as they are and represent the "PCR plastic waste material" as described herein. This material is used to prepare a (co)polymer composition for the core layer (iii). Said composition is obtainable by melting said PCR plastic waste material and mixing it with further ingredients. Said composition is then used to prepare the stretch film as described below.

The PCR plastic waste material preferably can be obtained from any film, e.g. any stretch film already at least once used for packaging of food, palleted goods, agricultural applications like silage bales or similar. Thus, it is preferred that the PCR plastic waste material comprises or consists of the same or of very similar components as it is described herein for the core layer (iii) or for the whole multilayer stretch film. Besides the below described (co)polymers said PCR plastic waste product of course comprises also all the ingredients usually included in stretch films, e.g. colorants, UV stabilators, polyisobutylene (PIB), slip or anti blocking agents. Those components are re-introduced into the core layer by usage of said PCR plastic waste material. The contaminations remaining in the PCR plastic waste product after washing and cleaning the material of course can be later on found in the core layer of the multilayer stretch film of the present invention. Further, polymers different from the below described polyethylene (co)polymers comprised in the PCR plastic waste product as well ae included in the core layer (iii).

The multilayer film of the present invention is a stretch film, which may be stretched in machine direction. Manually operated stretching is possible between zero and 200 percent of its unstretched length, wherein usually less than 100 percent stretching takes place. Machining operated stretching takes place by more than 100 percent, preferably by more than 200 percent, even more preferred by up to about 300 percent of its original, unstretched length, without damage to the film. Thus, the stretching range is indeed preferably from 0 to 300 percent. By stretching the film, the cling properties of the cling layer (i) increase with reference to the cling properties of the unstretched film, wherein the film itself remains elastic and undamaged.

Surprisingly it has been found that inclusion of one or more slip agent(s) selected from C₁₈-to C₂₆-fatty acid amides having at least one cis unsaturation results in a reliably stretchable multilayer film having up to 60 wt.% of PCR plastic waste material in the core layer(s) (iii). Said slip agent(s) can be included into the (co)polymer composition of the cling layer (i) during preparation of the composition. Preferably a minor amount of the slip agent(s) is/are also included into the slip layer (ii). Due to migration of the slip agent(s) to the outer surface of said cling layer (and optionally the slip layer) once during coextrusion of the multilayer stretch film and further during the stretching of the ready-prepared film, on one side a very thin layer of the slip agent is formed at the outer surface of said cling layer (and optionally said slip layer), lowering the cling properties of the unstretched or pre-stretched film, and on the other side said slip agent(s) appear(s) to provide positive properties to the core layer during stretching of the film so that the film remains highly elastic and can be stretched by up to 300 % without damaging, despite the remaining contaminants and despite the material fatigue of the components of the "already used" PCR plastic material included in the core layer. It is preferred that at least 50 percent and up to 100 % of the surface of the of the unstretched or pre-stretched film is covered by the slip agent(s).

The presence of the slip agent in the cling layer (and optionally in the slip layer) indeed does not lower the adhesion between the cling layer and the adjacent core layer.

The (co)polymer composition(s) of the multilayer stretch film of the present invention comprise(s) preferably substantially solely ethylene or propylene (co)polymers or mixtures thereof. It is preferred that the polypropylene (co)polymers included in the stretch film of the present application are only introduced by the usage of the PCR plastic waste material, thus, said polypropylene is only contained in the core layer (iii). According to this preferred embodiment the first layer (i) and the second layer (ii) comprise essentially only polyethylene (co)polymers as film-forming polymers, in particular those as defined below. With "comprise essentially only" is meant that more than 97 wt.% of the (co)polymers, preferably more than 98 wt.%, more preferred more than 99 wt.%, even more preferred 99,5 wt.%, even more preferred 99,8 wt.% and most preferred 100 wt.% of the (co)polymers of the film-forming (co)polymers are (co)polymers of polyethylene.

The olefin (co)polymer composition of the first layer (i) comprises (co)polymers which can be selected from low density polyethylene (LDPE) (density 0.915 to 0.94 g/cm³), linear low density polyethylene (LLDPE) (density 0.87 to 0.94 g/cm³), ultra low density polyethylene (ULDPE) (density 0.84 to 0.868 g/cm³), polypropylene or copolymers thereof with other C₂-C₁₂-α-olefins or mixtures thereof. The olefin (co)polymer composition has a density of from 0.84 to 0.91 g/cm³, preferably from 0.85 to 0.90 g/cm³, even more preferred in the range from 0.85 to 0.89 g/cm³.

The cling layer preferably does not contain "cling" additives such as PIB or other known cling additives.

The olefin (co)polymer composition of the second layer (ii) comprises (co)polymers which can be selected from polyethylene homo and copolymers having a density of from 0.87 g/cm³ to 0.94 g/cm³, thus, LDPE or LLDPE (co)polymers, preferably from polypropylene homo and copolymers with C₂-C₁₂-α-olefins (including C4, C6, C8) having a density of from 0.90 g/cm³ to 0.94 g/cm³ or mixtures thereof. Minor amounts of MDPE or HDPE can be included. The density of this layer preferably is above 0.90 g/cm³, preferably from 0.91 to 0.96 g/cm³.

The core layer (iii) is preferably prepared from up to 50 wt.% of PCR plastic waste material polymers selected from low density polyethylene (LDPE), medium density polyethylene (MDPE), high density polyethylene (HDPE), linear low density polyethylene (LLDPE), ultra low density polyethylene (ULDPE), polypropylene homo and copolymers with a C₂-C₁₂-α-olefin as comonomers or mixtures thereof. Further, the core layer comprises from 40 to 80 wt.%, preferably from 50 to 70 or from 50 to 60 wt.% of non-yet-used, "newly" prepared (co)polymers selected from the (co)polymers cited herein before, preferably LPDE and/or LLDPE (co)polymers, in particular LLDPE (co)polymers including C4, C6 and/or C8 monomers. It is preferred that the (co)polymer composition used for the core layer(s) has / have a density which is higher than the density of the (co)polymer compositions used for the first layer (i). The density is preferably of from 0.895 to 0.925 g/cm³, more preferred of from 0.910 to 0.920 g/cm³.

Examples of useful (co)polymer compositions for the layers are the following:
LDPE (or high pressure) is a homo polymer of ethylene having numerous long chain branches in their molecular structure. Such polymers are readily available commercially having a density of from 0.905 g/cm³ to 0.940 g/cm³ and a melt index ranging from 1 to 7 g/10 minutes (ASTM D-1238, condition 190°C/2.16 kg).

Commercially available LLDPE are often copolymers of ethylene with a minor amount, typically less of 20 weight percent of a C₃-C₁₂-α-olefin as comonomer. Suitable α-olefin comonomers are butene-1,1,3-dimethylbutene-1,3-dimethyl-pentene-1, hexene-1-4-methyl-pentene-1, 3-mehtylhexene-1, octene-1 or decane-1.
The densities are from 0.85 to 0.950 g/cm³ and the melt flow value (ASTM D 1238, condition 190°C/2.16 kg) is from about 0.3 to about 10.0 g/10 minutes.

ULDPE, ultra low density polyethylene are commercially available and are often copolymers of ethylene and at least one of C₃-C₁₂-α-olefin monomers similar to the comonomers of LLDPE. The density is from 0.84 g/cm³ to 0.915 g/cm³, preferably from 0.85 g/cm³ to 0.91 g/cm³.
The melt index (ASTM D 1238, condition 190°C/2.16 kg) is generally 0.8 g/10 minutes or less, preferably from 0.5 g/10 minutes to 7.5 g/10 minutes, preferably in the range of 1.0 to 4.0 g/10 minutes.

MDPE is commercially available having densities from 0.925 to 0.945 g/cm³ and the melt index ranging from 0.4 to 20 g/10 minutes (ASTM D 1238, condition 190°C/2.16 kg). Those polymers are often copolymers of ethylene and an α-olefin comonomer that the density of the copolymer decreases as the amount of comonomer increases. Suitable comonomers are C₃-C₁₀-α-olefins as listed above.

HDPE is a high density polyethylene type having densities greater than 0.945 g/cm³. The melt index is from 0.3 to 20 g/10 minutes.

Useful are also polypropylene homo and copolymers with C₂-C₁₂-α-olefins. The amount of comonomer in the copolymer is in general less than 20 weight percent of the copolymer. The density of polypropylene homo or copolymers is in general of from 0.9 g/cm³ to 0.95 g/cm³ and the melt index is from 0.3 to 40 g/10 minutes.

The total film thickness of the unstretched multilayer film of the present invention can be in the range of from 4 µm to 500 µm, preferably in the range from 5 µm to 250 µm and more preferably in the range from 6 µm to 80, even more preferably from 8 to 50, and most preferred from 10 to 30 µm, e.g. 12 to 25 µm, the thickness of the pre-stretched film is in the range of from .

The slip layer may have the same thickness as the cling layer or may be thicker than the cling layer. The slip layer typically comprising up to 20 percent, preferably 6 to 15, more preferred 8 to 12 percent of the total thickness of the film and the cling layer typically comprising up to 18 percent, preferably 5 to 15, more preferred 6 to 12 percent of the total thickness of the film. The core layer is typically thicker than each of the cling layer and slip layer and generally comprises at least 60, preferably 65 percent, more preferred from 70 to 88 and most preferred from 75 to 85 percent of the total thickness of the film. In a preferred embodiment the cling layer and the slip layer have the same thickness and represent each 8 to 12 percent of the total thickness of the film, whereas the one or more core layer(s) represent 76 to 84 percent of the total thickness of the film.

Additives such anti blocking agents, antioxidants (e. g. hindered phenolics or phosphits), pigments, colorants, fillers and processing aids can also be included in the stretch wrapping film of the present invention. However, the additives should be incorporated in such a manner or to the extend that they to not interfere with the substantial cling and slip properties of the multilayer stretch film according to the present invention.

The multilayer film of the present invention may be prepared from three or more film layers by coextrusion techniques with any blow or cast film extrusion equipment, known in the art. However, the preferred construction of the multilayer structure is prepared by coextrusion techniques.

The present invention includes a method of preparing the multilayer stretch film. The PCR plastic waste material used in the composition for preparing the core layer (iii) either may be molten separately and then combined with the other (co)polymers of the composition for core layer (iii), or the PCR plastic waste material can be combined with the other (co)polymers used for this composition in solid state and then the mixture is molten. Each of the compositions for preparation of the mentioned layers (i), (ii) and (iii) are prepared by a suitable method, e.g. by feeding the (co)polymer compositions into a coextrusion extruder, melting and mixing the (co)polymer compositions at suitable melt temperatures, preferably above 175°C and forming at least three molten (co)polymer composition streams, extruding the molten (co)polymer composition streams through an extrusion die to form a multilayer structure of the film tube or a film web, blowing up and cooling said film tube or drawing down and cooling said film web and collecting the unstretched multilayer film.

Preferably, extrusion of the molten (co)polymer streams through the extrusion die takes place at temperatures between 160°C and 300°C.

In a preferred embodiment the method for preparing a multilayer stretch film comprises the steps of
a) Mixing at least one (co)polymer as defined above for the first layer (i) with at least one slip agent selected from C₁₈-to C₂₆-fatty acid amides having at least one cis unsaturation for providing a composition for preparing a first layer (i),
b) Mixing at least one (co)polymer as defined above for the second layer (ii) with at least one of (a) a slip agent selected from C₁₈-to C₂₆-fatty acid amides having at least one cis unsaturation or (b) an anti-blocking agent for providing a composition for preparing a second layer (ii),
c) Mixing PCR plastic waste material with non-yet-used (co)polymers as defined above for the core layer (iii) so that the PCR plastic waste material is present in an amount of from 20 to 60 wt.%, preferably 30 to 50 wt.% of said mixture,
d) Feeding each of the (co)polymer compositions into an extruder, melting and mixing the (co)polymer compositions at melt temperatures above 175°C and forming at least three molten (co)polymer composition streams,
e) Extruding the molten (co)polymer composition streams through a coextrusion feed block to form a multilayer structure of the film tube or a film web,
f) Blowing up and cooling said film tube or drawing down and cooling that film web
g) optionally biaxial pre-stretching the film, and
h) Upwinding of the unstretched multilayer film.

The film thickness of the unstretched multilayer film obtained by the above described method can be in the range of from 4 µm to 500 µm, preferably in the range from 5 µm to 250 µm and more preferably in the range from 6 µm to 80, even more preferably from 8 to 50, and most preferred from 10 to 30 µm, e.g. 12 to 25 µm

The film might be pre-stretched before it is finally collected / wound up, e.g. to a film thickness of from 1 to 200 µm, preferably from 2 to 100 µm. more preferred to 3 to 50 µm, even more preferred to 4 to 20 µm, and most preferred to 5 to 12 µm, like e.g. any thickness between 6 and 10 µm, dependent from the original thickness of the film.

The unstretched or pre-stretched web or tube of the multilayer film is wound up, preferably as reels having the cling layer either at the inner side or at the outer side of the wound-up film.

The multilayer film of the invention is preferably a blown film. Suitable blown film processes are very well known and described, for example, in The Encyclopedia of Chemical Technology, Kirk-Othmer, Third Edition, 1981 (Vol. 16, pp. 416-417 and Vol. 18, pp. 191-192).

However, the film can also be prepared by cast extrusion techniques which are also well known in the art.

Due to the use of PCR plastic waste material the stretch film according to the invention obtained by the method as described above may comprise in the core layer (iii) up to 5 wt.% (e.g. up to 4 wt.%, or up to 3 wt.% or up to 2 wt.%, and usually at least 0,2 wt.%, at least 0,4 wt.%, at least 0,6 wt.% or at least 0,8 wt.%, e.g. at least 1 wt.%) of contaminants originating from the PCR plastic waste material, thus not intentionally added to the composition. Such contaminating material can include organic material including carbohydrates, proteins, nucleic acids or fatty acids from food residues, cellulosic material like paper residues, grass, hay, straw or wood residues, or soil, polymers differing from the herein described polyethylene polymers, like e.g. polypropylene, polyacrylates, polyurethanes, ethylene vinylacetate (EVA) copolymers, polyamides, polyesters or styrene block copolymers, e.g. originating from adhesives, or inorganic contaminants like silicate, silicon dioxide,, calcium carbonate, sodium or potassium chloride, or other mineral contaminants originating from sand or soil, without being restricted to the mentioned. Since some or several of the mentioned components either do not (completely) melt during the heating step for melting the (co)polymers used for the respective layers, some of the contaminants remain solid or semi-solid in the molten material. Therefore, the final filmis essentially not as clear and transparent and not as uniformly coloured as films prepared exclusively from non-yet used (co)polymers of the above described type, but appears opaque and/or comprises some irregularities either in colour or in opacity. Opacity of such films are e.g. in the range from 2 to 20 %, e.g. 4 to 15 %. Therefore, it might be desirable to include any colorant in at least one of the layers to provide the film with a pleasant appearance. For this purpose, e.g. the composition used for preparation of the core layer may comprise 2 to 8 wt.% of any colorant. Furthermore, due to the use of former waste, a stretch film of the present invention may provide a particular olfactory impression, which might be covered by the addition of any fragrance. Since, however, in the stretch film of the present invention the PCR plastic waste material is only used in the core layer, which on both sides (surfaces) is fully covered by the first and second layer, respectively (not including PCR plastic waste material), the packaged good or article(s) doesn't come in contact with the contaminants of waste optionally present in the film.

The stretch film as described above can further be processed due to any desired approach. For example, the stretch film can be provided with reinforcing stripes, either at the borders and / or edges, e.g. with stripes of the same film material e.g. as described in EP 2 047 985 A1 or EP 2 205 439 A1, or of similar film material with or without PCR plastic waste material included, or the film is provided with reinforcing stripes on the surface of the film, e.g. as described in EP 3 160 728 A1, or both. Further, the film can be perforated to provide air permeability to said film, said perforations can be in a regular pattern or irregularly provided. Such perforated films are e.g. described in WO11/026953 or WO11/026955. To be able to process films which have multiple perforations on their surface (for example films for air-permeable packaging), it is preferred to apply reinforcing strips between the perforations, giving the perforated film such stability that it can continue to be mechanically processed, preferably automatically processed: Such an approach is e.g. described in patent applications WO01/60709, WO03/059750 and WO2006/018028.

The multilayer film of the present invention is suitable for any wrapping operation commonly known for wrapping stretch films. Such a process generally involves threading a film from a supply reel through an automated or manual wrapping device and then wrapping the film about any good, e.g. an article or group of articles supported on a pallet and sealing the film to itself. In the final, wrapped good, the slip layer will normally face outwards. Examples for use are load palletization or agricultural applications, e.g. for packaging silage as bales.

The film according to the present invention provides the opportunity to include PCR plastic waste material in a re-use product having similar or almost the same properties and characteristics as a product made of only not-yet-used material. These properties are in particular elasticity, robustness, tear strength, and a low noise on unwinding from a supplier roll. In general, noise levels on unwinding do not exceed 84 dB. The noise level is measured using a RION, MA-14 Soundlevelmeter, positioned at 15 cm from the unwinding point of the film supply roll at an unwind speed of 55 m/minute and an environmental noise level of 61 dB.

The presence of the slip agent at least on the surface of the first layer also results in a smoother surface than conventional multilayer stretch films.

## Claims

1. A multilayer stretch film having at least a first layer (i) with cling properties comprising an olefin (co)polymer composition and at least one slip agent, a second layer (ii) with non-cling / slip properties comprising another olefin (co)polymer composition and optionally at least one slip agent, and a third layer (iii), represented by at least one core layer comprising at least 20 wt.% of (co)polymers of a post-consumer recycled (PCR) plastic waste material, wherein at least the first layer (i) comprises at least one slip agent(s) providing the surface with a thin layer of said slip agent(s) covering at least 50 % up to 100 % of the outer surface of the first layer (i), wherein said slip agent(s) are selected from C₁₈-to C₂₆-fatty acid amides having at least one cis unsaturation.

2. The multilayer stretch film of claim 1, wherein the thin layer of slip agent(s) on the surface of at least the first layer (i) has a thickness of from 20 nm to 0.25 µm, like from 40 nm to 180 nm or from 50 nm to 150 nm, or even from 70 to 120 nm.

3. The multilayer stretch film of claim 1 or 2, wherein the slip agent(s) selected from C₁₆-to C₂₄-fatty acid amides having at least one cis unsaturation are selected from C16:1, C18:1, C20:1, C22: or C24:1, C16:2, C18:2, C18:3, C20:2, C22:2 or C24:2 fatty acid amides, preferably from C18:1, C18:2, C18:3, C20:1, C22:1 or C24:1 fatty acid amides, even more preferred the fatty acid amide is selected from oleic acid, gadoleic acid, 11-eicosenoic acid, cetoleic acid, erucic acid or nervonic acid amides.

4. The multilayer stretch film of any of claims 1 to 3, wherein at least erucic acid amide is present as a slip agent in at least the first layer (i), and preferably also in the second layer (ii).

5. The multilayer stretch film of any of claims 1 to 4 wherein the slip agent(s) selected from C₁₆-to C₂₄-fatty acid amides having at least one cis unsaturation is/are present in the first layer (i) in a total amount of from 1000 to 8000 ppm, based on the total weight of the (co)polymer composition of the first layer (i), preferably from 1200 ppm to 5000 ppm, more preferred from 1500 to 4000 ppm, even more preferred from 1800 to 3000 ppm, and is/are present in the second layer (ii) in a total amount of from 0 to 1000 ppm, preferably from 200 to 900 ppm, more preferred from 400 to 800 ppm and most preferred from 500 to 700 ppm, or with 600 ppm, based on the total weight of the second layer.(ii).

6. The multilayer stretch film of any of claims 1 to 5 wherein the olefin (co)polymer composition of the first layer (i) comprises (co)polymers selected from low density polyethylene (LDPE), linear low density polyethylene (LLDPE), ultra low density polyethylene (ULDPE), polypropylene or copolymers thereof with other C₂-C₁₂-α-olefins or mixtures thereof.

7. The multilayer stretch film of claim 6, wherein said olefin (co)polymer composition of the first layer (i) has a density of from 0.84 to 0.91 g/cm³, preferably from 0.85 to 0.90 g/cm³, even more preferred in the range from 0.85 to 0.89 g/cm³.

8. The multilayer stretch film of any of claims 1 to 7 wherein the olefin (co)polymer composition of the second layer (ii) comprises (co)polymers selected from, LDPE or LLDPE (co)polymers, polypropylene homo and copolymers with C₂-C₁₂-α-olefins (including C4, C6, C8) or mixtures thereof.

9. The multilayer stretch film of claim 8, wherein said olefin (co)polymer composition of the second layer (ii) has a density of this layer preferably is above 0.90 g/cm³, preferably from 0.91 to 0.96 g/cm³.

10. The multilayer stretch film of any of claims 1 to 9, wherein the core layer(s) comprise 25 to 60 wt.%, preferably 27 to 58 wt.%, even more preferred 28 wt.% to 55 wt.% and most preferred 30 to 50 wt.% of the weight of the core layer of (co)polymers of PCR plastic waste material, in particular PCR plastic material of already-used plastic films, preferably films of LDPE, LLDPE and optionally MLPE or ULPDE (co)polymers.

11. The multilayer stretch film of any of claims 1 to 10, wherein the olefin (co)polymer composition of the one or more core layers (iii) besides the PCR plastic waste material polymers comprises polymers selected from non-yet-used low density polyethylene (LDPE), medium density polyethylene (MDPE), high density polyethylene (HDPE), linear low density polyethylene (LLDPE), ultra low density polyethylene (ULDPE) polypropylene homo and copolymers with C₂-C₁₂-α-olefins or mixtures thereof.

12. The multilayer stretch film of claim 11, wherein the olefin (co)polymer composition of the one or more core layers (iii) has a density of from 0.895 to 0.925 g/cm³.

13. The multilayer film according to any of claims 1 to 12, wherein at least the second layer (ii) comprises at least one anti-blocking agent in a total amount of from 100 to 1000 ppm, preferably from 200 to 900 ppm, more preferred from 400 to 800 ppm and most preferred from 500 to 700 ppm, or with 600 ppm, wherein preferably at least one anti-blocking agent is a synthetic silica.

14. A method for preparing a multilayer stretch film according to any of claims 1 to 13, comprising the steps of
a) Mixing at least one (co)polymer as defined in claim 6 with at least one slip agent selected from C₁₈-to C₂₆-fatty acid amides having at least one cis unsaturation for providing a composition for preparing a first layer (i),
b) Mixing at least one (co)polymer as defined in claim 8 with at least one of (a) a slip agent selected from C₁₈-to C₂₆-fatty acid amides having at least one cis unsaturation or (b) an anti-blocking agent for providing a composition for preparing a second layer (ii),
c) Mixing PCR plastic waste material with non-yet-used (co)polymers as defined in claim 11 so that the PCR plastic waste material is present in an amount of from 20 to 60 wt.%, preferably 30 to 50 wt.% of said mixture,
d) Feeding each of the (co)polymer compositions into an extruder, melting and mixing the (co)polymer compositions at melt temperatures above 175°C and forming at least three molten (co)polymer composition streams,
e) Extruding the molten (co)polymer composition streams through an extrusion die to form a multilayer structure of the film tube or a film web,
f) Blowing up and cooling said film tube or drawing down and cooling that film web,
g) Optionally biaxially pre-stretching the film, and
h) Upwinding the unstretched or pre-stretched multilayer film.

15. A multilayer film according to any of claims 1 to 13 or as prepared according to claim 14, wherein said film further comprises at least one of:
(I) at least two reinforcing film stripes of similar or the same (co)polymer material as the multilayer film, provided at the edges, the borders or on the surface of the film web, preferably at least 4, at least 6, at least 8 or at least 10 of such stripes.
(II) Perforations, preferably a pattern of perforations evenly distributed over the whole area of the film web.

16. Use of a multilayer stretch film of any of claims 1 to 11 or obtained by the method claims 12 to 15 for stretch wrapping operations of goods, articles or groups of articles.
